Europäisches Patentamt

European Patent Office

Office européen des brevets

(11) Publication number : **0 347 671 B1**

(12) **EUROPEAN PATENT SPECIFICATION**

(45) Date of publication of patent specification :
25.10.95 Bulletin 95/43

(51) Int. Cl.⁶ : **G06K 9/46,** G07C 9/00

(21) Application number : **89110484.6**

(22) Date of filing : **09.06.89**

(54) **Finger collation and pattern image processing apparatus.**

(30) Priority : **22.06.88 JP 154228/88**

(43) Date of publication of application :
**27.12.89 Bulletin 89/52**

(45) Publication of the grant of the patent :
**25.10.95 Bulletin 95/43**

(84) Designated Contracting States :
**FR GB IT**

(56) References cited :
**EP-A- 0 233 628**
**US-A- 4 186 378**
**PATENT ABSTRACTS OF JAPAN vol. 14, no. 189 (P-1037) 17 April 1990**
**PATENT ABSTRACTS OF JAPAN vol. 13, no. 279 (P-891) 27 June 1989**
**PATENT ABSTRACTS OF JAPAN vol. 13, no. 146 (P-854) 11 April 1989**
**PATENT ABSTRACTS OF JAPAN vol. 11, no. 5 (P-533) 8 January 1987**

(73) Proprietor : **KABUSHIKI KAISHA TOSHIBA
72, Horikawa-cho,
Saiwai-ku
Kawasaki-shi, Kanagawa-ken 210, Tokyo (JP)**

(72) Inventor : **Takeda, Masahiro c/o Intellectual Property Div.
Kabushiki Kaisha Toshiba
1-1 Shibaura 1-chome
Minato-ku Tokyo 105 (JP)**
Inventor : **Uchida, Satoshi c/o Intellectual Property Div.
Kabushiki Kaisha Toshiba
1-1 Shibaura 1-chome
Minato-ku Tokyo 105 (JP)**

(74) Representative : **Henkel, Feiler, Hänzel & Partner
Möhlstrasse 37
D-81675 München (DE)**

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Jouve, 18, rue Saint-Denis, 75001 PARIS

# Description

The present invention relates to a pattern image processing apparatus applied to an entrance/exit monitoring apparatus for monitoring a person who enters or exits from a predetermined room and, more particularly, to a pattern image processing apparatus for collating image data of a finger read by a reader with image data of a finger which is stored in advance in a memory device to verify a person.

Conventionally, a person who enters or exits from a predetermined room or location identifies himself using an identification card or using an identification number which is known only to himself. However, when an identification card is used, a person may lose the card or the card may be stolen, and it is difficult to guarantee safety of the card. When an identification number is used, a person may forget the identification number or the number may be illegally used. For this reason, it is difficult safely and reliably to identify the person.

Recently, various verification methods for identifying a person utilizing personal physical features have been developed. For example, a method of utilizing a fingerprint as disclosed in Japanese Patent Disclosure (KOKAI) No. 59-2184, a method of utilizing a handprint consisting of finger length and width data as disclosed in Japanese Patent Disclosure (KOKAI) No. 61-122797, and the like are known.

However, when fingerprints are utilized, a fingerprint read by a reader is collated with a fingerprint pre-registered in a memory device. Therefore, complex two-dimensional processing must be performed.

When handprints are used, palm data of a hand including lengths and widths of the four or five fingers must be read by a reader. For this purpose, a reader having a size equivalent to that of a hand is required, and the apparatus undesirably becomes large in size.

A verification method for verifying a person using an inter-joint length of a finger is proposed. In this verification method, image data of a finger is read by a reader, and the read finger image data is converted to a binary signal by an A/D converter. A finger edge is obtained from the binary signal, and the positions of joints are obtained from the edge. A length between the obtained adjacent joints is collated by a collating device with an inter-joint length prestored in a memory device to verify the person.

However, in collation using only a length between adjacent joints, since a data volume necessary for collation is small, it is difficult to improve collation accuracy.

In order to precisely detect an inter-joint length, the position of the distal end of a finger must be accurately detected. However, in order to accurately detect the distal end position of a finger, a device for detecting the distal end of a finger must be arranged, thus complicating the apparatus.

Prior art document EP-A-0 233 628 discloses an apparatus for hand dimension verification wherein a two dimensional scanner provides image data from top and angled scans to an image processor which processes this data to develop invariable hand measurements using reference points located from hand contour sequences generated from the image scan data. The reference points are located so as to be immune from variations introduced by fingernail length, hand pressure and finger spread. Finger width measurements are made using certain reference points and finger width variations are used to determine the presence of abnormalities which could be natural or introduced by wearing of jewelry. The finger width variations are in effect removed by locating finger contour points at the beginning and ending of the variations and using finger slope data for trimming and thereby provide invariable finger width measurements together with finger thickness, finger length and hand area measurements for hand dimension verification.

Further, prior art document Patent Abstrats of Japan, vol. 11, no. 5 (P-533) and JP-61 182 178, discloses a pattern detecting device wherein a projection histogram preparing circuit obtains a projection histogram concerning respective orthogonal coordinates shafts X and Y for an almost elliptic shade and a picture including noise at the periphery. A separating number of pairs Nx and Ny of the histogram projected in the X shaft direction and Y shaft direction is based upon the output from a starting point and an end point discriminating circuit and obtained from a separating number deciding circuit. When the respetive separating numbers Nx and Ny are dissident, a picture memory control circuit is operated, only the picture of the part surrounded by the circumscribing quadrilateral obtained by an above-mentioned coordinates discriminating circuit 20 is sent to the input side, and when the number of separation is coincident, such an action command signal is not sent.

It is an object of the present invention to provide a pattern image processing apparatus which is compact and which verifies a person using finger image data read by a reader without detecting a distal end position of a finger using a device for detecting the distal end position of a finger, so that collation accuracy can be improved by a compact apparatus. To solve this object the present invention provides an appratus as specified in claim 1.

The pattern image processing apparatus for collating image data of a finger includer means for reading image data of a finger; means for generating feature data of the finger by adding the image data of the finger read by the reading means in a direction perpendicular to a longitudinal direction of the finger; and means for comparing the feature data of the finger generated by the generating means and pre-generated collation feature data of the finger.

A more complete appreciation of the invention and many of the attendant advantages thereof will be readily obtained as the same becomes better understood by reference to the following detailed description when considered in connection with the accompanying drawings, wherein:

Fig. 1 is a block diagram showing an embodiment of the present invention;

Fig. 2 is a flow chart for explaining a registration operation of a finger image in the apparatus shown in Fig. 1;

Fig. 3A is an illustration showing a finger image sensed by a camera;

Fig. 3B is a chart showing an electrical signal corresponding to the finger image shown in Fig. 3A;

Fig. 4 is a flow chart for explaining a monitoring operation of entrance and exit from a room using the apparatus shown in Fig. 1;

Fig. 5A is an illustration showing a finger image sensed by a camera;

Fig. 5B is a chart showing an electrical signal corresponding to the finger image shown in Fig. 5A;

Fig. 6 is a flow chart showing in detail a collation operation of the finger image shown in Fig. 4; and

Fig. 7 is a block diagram showing a main part of another embodiment of the present invention.

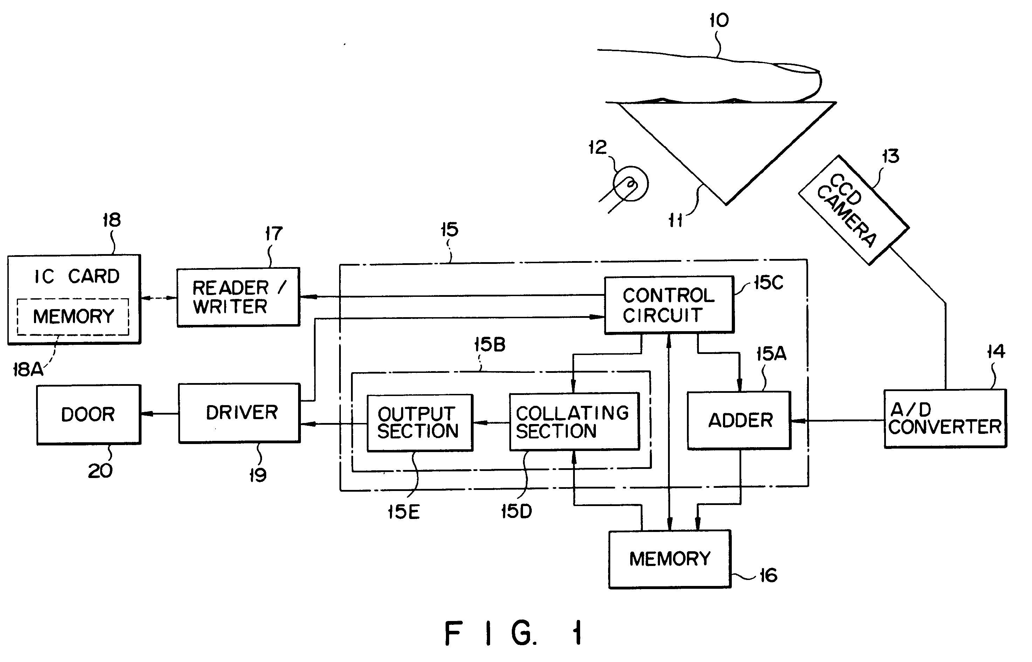

Referring now to the drawings, wherein like reference numerals designate identical or corresponding parts throughout the several views, and more particularly to Fig. 1 thereof, in Fig. 1, a light source 12 and a camera 13 are arranged near a prism 11. The light source 12 illuminates a finger 10 contacting the surface of the prism 11. The camera 13 comprises, e.g., a CCD camera, which receives light emitted from the light source 12 and reflected by the finger 10 contacting the surface of the prism 11, and senses an image corresponding to the finger 10. The camera 13 senses an image corresponding to a portion including at least first and second joints of a finger. The finger image output from the camera 13 is supplied to an A/D converter 14, and is converted to, e.g., an 8-bit digital signal. The digital finger-image signal consiting of e.g., $512 \times 512$ pixels in row and column directions, output from the A/D converter 14 is supplied to a controller 15.

The controller 15 controls the entire apparatus and includes an adder 15A, a comparator 15B, and a control circuit 15C. The comparator 15B includes a collating section 15D and an output section 15E. The controller 15 is connected to a memory 16, a reader/writer 17, and a driver 19.

The adder 15A adds the finger image signals output from the A/D converter 14 column by column. A sum output from the adder 15A is supplied to the memory 16. The memory 16 stores various programs necessary for the operation of the control circuit 15C in addition to the sum from the adder 15A. An IC card 18 serving as a portable storage medium and including a memory 18A is loaded into the reader/writer 17. The reader/writer 17 writes data in the memory 18A included in the IC card 18, and reads out data stored in the memory 18A. The collating section 15D collates data read out from the memory 16 with data supplied from the reader/writer 17 through the control circuit 15C. The collating section 15D outputs a collation result indicating a coincidence/non-coincidence between the two data. The collation result is supplied to the output section 15E.

When the output section 15E receives the collation result indicating a coincidence from the collating section 15D, it supplies a drive instruction to the driver 19. The driver 19 opens/closes a door 20 arranged at a predetermined location in accordance with an instruction from the output section 15E.

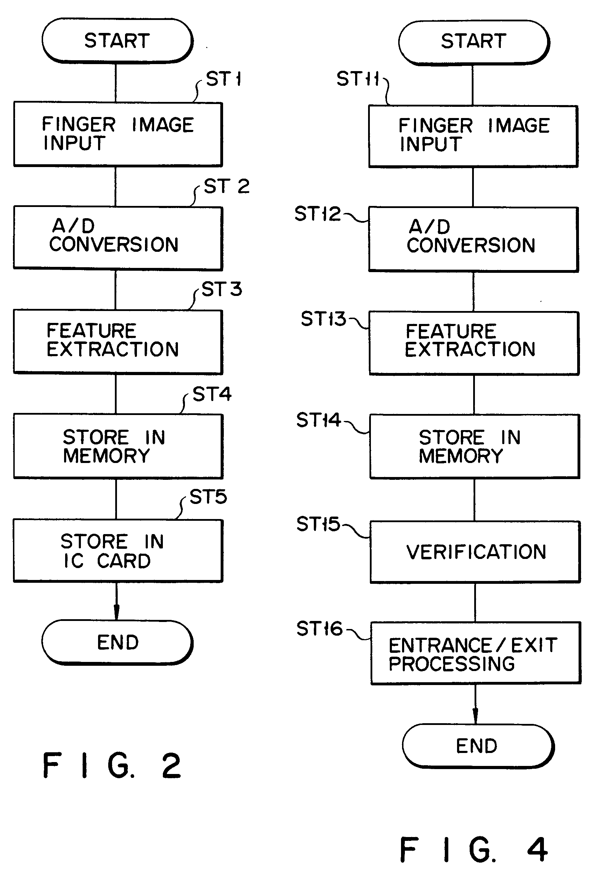

With the above arrangement, an operation when a holder of the IC card 18 inputs feature data of his or her finger in the memory 18A will be described below with reference to Fig. 2.

When the finger 10 is brought into contact with the surface of the prism 11, it is irradiated with light emitted from the light source 12. The light emitted from the light source 12 is totally reflected or scattered by the surface of the finger 10, and a monochromatic finger image of a fingerprint and joints is produced. The finger image is sensed by the camera 13. Image signals output from the camera 13 are converted into digital signals (8 bits/pixel) (steps ST1 and ST2). The digital finger-image signals consisting of e.g., $512 \times 512$ pixels in row and column directions, output from the A/D converter 14 are supplied to the controller 15 in units of columns, and are added by the adder 15A (step ST3).

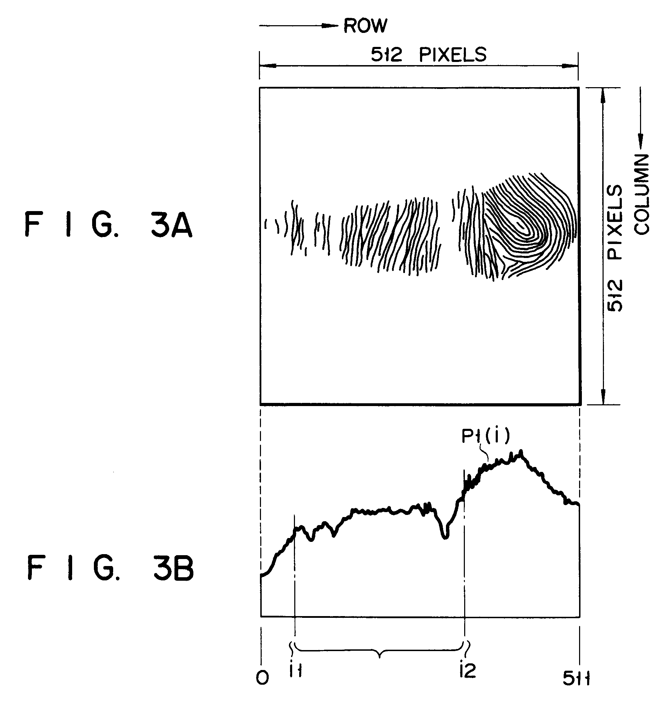

More specifically, assuming that the finger image output from the camera 13 is as shown in Fig. 3A, 8-bit digital signals corresponding to 512 pixels in a direction perpendicular to the longitudinal direction of the finger image are supplied to and added by the adder 15A. The addition by the adder 15A are performed for 512 columns, thus obtaining linear feature data P1(i) (i = 0, 1, ..., 511) consisting of 512 pixels (step ST3). The feature data P1(i) added by the adder 15A is stored in the memory 16 (step ST4).

Fig. 3B shows this feature data P1(i). The feature data P1(i) stored in the memory 16 is sequentially read out by the control circuit 15C, and is stored in the memory 18A of the IC card 18 loaded to the reader/writer 17 by the reader/writer 17 (step ST5).

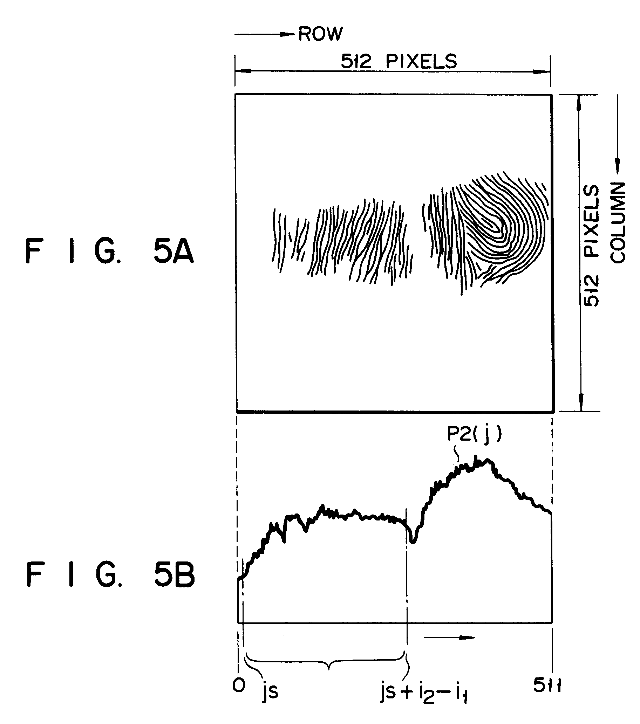

As described above, a case will be described with reference to Fig. 4 wherein feature data of a finger is collated after the feature data of a finger of a person is stored in the IC card 18 as described above.

In the collation operation shown in Fig. 4, steps ST11 to ST14 are the same as steps ST1 to ST4 in the registration operation. That is, an image of a finger contacting the surface of the prism 11 is read by the camera 13, and is converted into digital signals by the A/D converter 14. The digital finger-image signals are added by the adder 15A, as described above, thus generating feature data P2(j) (j = 0, 1,..., 511). The generated feature data P2(j) is stored in the memory 16.

Fig. 5A shows a finger image sensed by the camera 13 in the collation mode, and Fig. 5B shows the feature data P2(j) (j = 0, 1, ..., 511) generated based on the finger image and stored in the memory 16.

The feature data P2(j) stored in the memory 16 is collated with the feature data P1(i) stored in the memory 18A of the IC card 18. In this collation operation, distances between data within the range of:

$$i1 \leqq i \leqq i2$$
$$(i1, i2 = 0, 1,..., 511, i1 < i2)$$

obtained by removing two end portions of the feature data P1(i), as shown in Fig. 3B, and data within the range of:

$$js \leqq j \leqq js + i2 - i1$$
$$(js = 0, 1,..., 510)$$

in the feature data P2(j) shown in Fig. 5B are calculated. This collation operation is performed for the entire range of the feature data P2(j) while shifting the value js with respect to the feature data P2(j) element by element so as to determine whether or not a collating result including a distance equal to or smaller than a predetermined value is present.

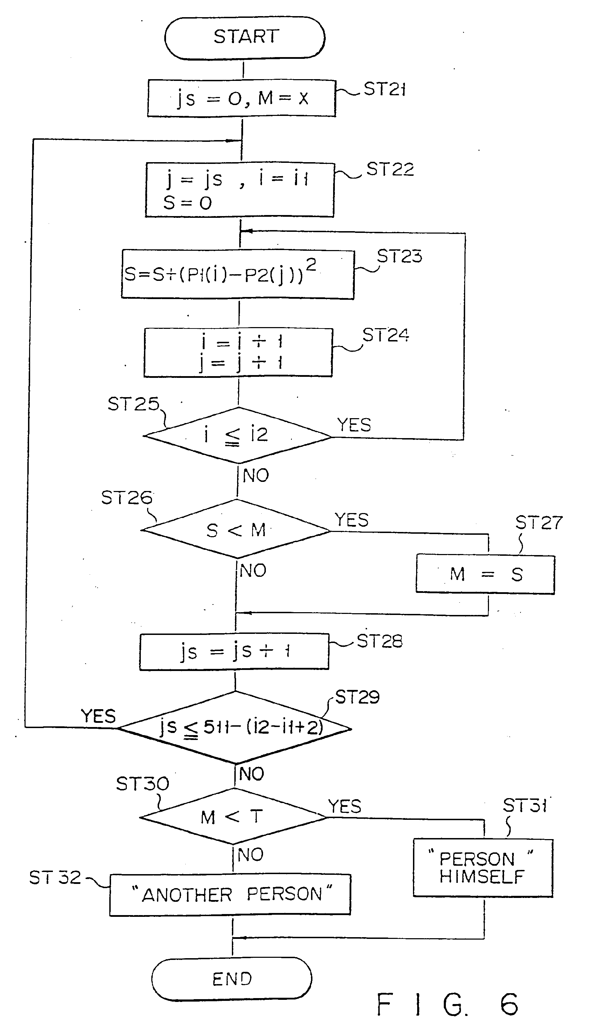

Fig. 6 shows the collation operation.

First, pointers js, j and i, and storage areas M and S are initialized (steps ST21 and ST22). In this case, a value in the area M is set to be sufficiently larger than a threshold value T (to be described later). Squares of differences between corresponding elements of P1(i) and P2(j) in the range of i1 to i2 are calculated for each element of the feature data, and a total sum of the calculated values is stored as a distance between P1(i) and P2(j) in the storage area S (steps ST22 to ST25). After the distance in the range of i1 to i2 is calculated, if the distance stored in the storage area S is smaller than the content of the storage area M, the content of the storage area M is rewritten with the calculated distance (steps ST26 and ST27).

Thereafter, it is checked if the above operation is completed for the entire range of P2(j) (steps ST28 and ST29). If No in step ST29, the operation shown in steps ST22 to ST29 is repeated. If YES in step ST29, the content of the storage area M is compared with the predetermined threshold value T (step ST30). The storage area M stores a minimum value of the calculated distances. When the minimum value is smaller than the predetermined threshold value T, it is determined that the finger feature data stored in the memory 18A of the IC card 18 coincides with the finger feature data read by the camera 13, thus identifying the person to be the "person himself" (step ST31). If the minimum value is larger than the threshold value T, it is determined that the finger feature data stored in the memory 18A of the IC card 18 does not coincide with the finger feature data read by the camera 13, thus identifying the person to be "another person" (step ST32).

In this manner, when the person is identified to be the "person himself", the door 20 is opened by the driver 19 which is driven in accordance with an instruction supplied from the output section 15E, thus permitting entrance/exit. If the person is identified to be "another person", entrance/exit is rejected (step ST16 in Fig. 4).

According to the above embodiment, digital finger-image signals are added in a direction perpendicular to the longitudinal direction of a finger to obtain feature data. The feature data is collated with feature data prestored in the memory 18A of the IC card 18 by a similar method. Therefore, since a collation is made using joint data of a finger and data other than the joint data, collation accuracy can be improved as compared to a case wherein a collation is performed using only an inter-joint length in a conventional apparatus (cf. JP-A-1 066 779).

Since the distal end position of a finger need not be accurately detected, a device for detecting the distal end position of a finger need not be arranged, and the arrangement of the apparatus can be rendered compact.

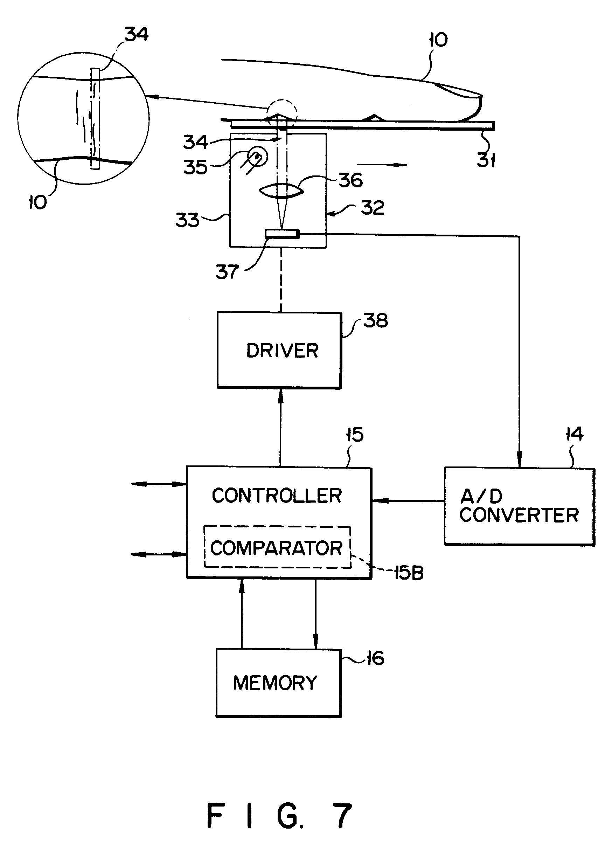

Fig. 7 shows another embodiment of the present invention. The same reference numerals in Fig. 7 denote the same parts as in Fig. 1.

In Fig. 7, a finger 10 is brought into contact with a transparent glass 31. A reader 32 is arranged under the lower surface of the glass 31. The reader 32 has a housing 33. A slit 34 is formed in a surface of the housing 33 opposing the glass 31. The slit 34 has a sufficiently small width, for example 0.1 mm, and has a length larger than the width of the finger 10. A light source 35, a focusing lens 36, and a light-receiving element 37 are arranged in the housing 33. The light source 35 illuminates the finger 10 through the slit 34. Light reflected by the finger 10 is incident into the housing 33 through the slit 34, and the incident light is focused on the light-receiving element 37 by the lens 36. Therefore, the light-receiving element 37 outputs an electrical signal corresponding to a total sum of light from the surface of the finger 10 corresponding to the slit 34.

A driver 38 is electrically connected to a controller 15, and is mechanically connected to the housing 33. The driver 38 moves the housing 33 along the longitudinal direction of the finger 10 in accordance with an instruction output from the controller 15. Therefore, upon movement of the reader 32, the light-receiving element 37 outputs an electrical signal corresponding to the light reflected by the finger 10, as shown in Figs. 3B and 5B. The output signal from the light-receiving element 37 is supplied to an A/D converter 14, and is converted to a digital signal. The digital signal output from the A/D converter 14 is sequentially stored in a memory 16 through the controller 15. Finger feature data stored in the memory 16 is stored in a memory 18A of an IC card 18. The feature data stored in the memory 18A is compared by a comparator 15B with a finger image separately read by the reader 32, thus identifying the person in the same manner as in the above embodiment.

In the embodiment shown in Fig. 7, the electrical signal output from the light-receiving element 37 corresponds to a total sum of light reflected by the surface of the finger 10 corresponding to the slit 34. Therefore, the controller 15 need not include an adder shown in Fig. 1. This embodiment can provide the same effect as the Fig. 1 embodiment.

Obviously, numerous additional modifications and variations of the present invention are possible in light of the above teachings. It is therefore to be understood that within the scope of the appended claims, the invention may be practiced otherwise than as specifically described herein.

## Claims

1. A pattern image processing apparatus for collating image data of a finger of a person to be identified, comprising:
    means (13) for reading image data of said finger (10);
    means (15A) for generating feature data P2(j) of the finger, said feature data being formed by a successive series of values generated in a direction along the length of said finger, wherein each of said values corresponds to the sum of the outputs of the image data reading means (13) obtained by reading in a direction perpendicular to the length of said finger, and
    means (15B) for comparing the said generated feature data P2(j) with previously registered finger feature data P1(i).

2. An apparatus according to claim 1, characterized in that said comparison means (15B) comprises storage means (18A) for storing the previously registered feature data P1(i).

3. An apparatus according to claim 1, characterized in that said comparing means (15B) comprises output means (19) for outputting an instruction, when the feature data P2(j) of the finger generated by said generating means (15A) coincides with the previously registered feature data P1(i).

4. An apparatus according to any one of claims 1 to 3, characterized by comprising means (19) for, when said comparison means (15B) finds a coincidence between the feature data P2(j) of the finger generated by said generating means (15A) and the previously registered feature data P1(i), opening a door (20).

5. An apparatus according to any one of claims 1 to 4, characterized in that said image data reading means (32) reads image data of said finger (10) in incremental units along a longitudinal direction of the finger.

6. An apparatus according to claim 5, characterized in that said reading means (32) comprises:
    means (34) for applying light to said finger in a direction perpendicular to the longitudinal direction of the finger;
    means (37) for converting light applied by said light applying means (34), reflected by said finger, and corresponding to the image data of the finger into an electrical signal; and
    means (38) for moving said light applying means (34) and said converting means (37) along the longitudinal direction of the finger.

## Patentansprüche

1. Musterbildverarbeitungsgerät zum Vergleichen bzw. Kollationieren von Bilddaten eines Fingers einer zu identifizierenden Person, mit:
    einer Einrichtung (13) zum Lesen von Bilddaten des Fingers (10),
    einer Einrichtung (15A) zum Erzeugen von Merkmaldaten P2(j) des Fingers, wobei die Merkmaldaten durch aufeinander folgende Folgen von Werten gebildet sind, die in einer Richtung entlang der Länge des Fingers erzeugt sind, wobei jeder der Werte der Summe der Ausgangssignale der Bilddaten-Leseeinrichtung (13) entspricht, die durch Lesen in einer Richtung senkrecht zu der Länge des Fingers erhalten sind, und
    einer Einrichtung (1 5B) zum Vergleichen der erzeugten Merkmaldaten P2(j) mit zuvor aufgezeichneten Fingermerkmaldaten P1 (i).

2. Gerät nach Anspruch 1, dadurch gekennzeichnet, daß die Vergleichseinrichtung (1 5B) eine Speichereinrichtung (1 8A) zum Speichern der zuvor registrierten Merkmaldaten P1(i) hat.

3. Gerät nach Anspruch 1, dadurch gekennzeichnet, daß die Vergleichseinrichtung (15B) eine Ausgangseinrichtung (19) zum Ausgeben eines Befehles hat, wenn die durch die Erzeugungseinrichtung (15A) erzeugten Merkmaldaten P2(j) des Fingers mit den zuvor registrierten Merkmaldaten P1(i) übereinstimmen.

4. Gerät nach einem der Ansprüche 1 bis 3, gekennzeichnet durch eine Einrichtung (19), um, wenn die Vergleichseinrichtung (15B) eine Übereinstimmung zwischen den durch die Erzeugungseinrichtung (15A) erzeugten Merkmaldaten P2(j) des Fingers und den zuvor registrierten Merkmaldaten P1(i) feststellt, eine Tür (20) zu öffnen.

5. Gerät nach einem der Ansprüche 1 bis 4, dadurch gekennzeichnet, daß die Bilddatenleseeinrichtung (32) Bilddaten des Fingers (10) in inkrementellen Einheiten entlang einer Längsrichtung des Fingers ließt.

6. Gerät nach Anspruch 5, dadurch gekennzeichnet, daß die Leseeinrichtung (32) aufweist:
    eine Einrichtung (34), um Licht auf den Finger in einer Richtung senkrecht zu der Längsrichtung des Fingers einwirken zu lassen,
    eine Einrichtung (37), um das durch die Lichteinwirkungseinrichtung (34) einwirkende, durch den Finger reflektierte und den Bilddaten des Fingers entsprechende Licht in ein elektrisches Signal umzuwandeln, und
    eine Einrichtung (38), um die Lichteinwirkungseinrichtung (34) und die Umwandlungseinrichtung (37) entlang der Längsrichtung des Fingers zu verfahren.

**Revendications**

1. Appareil de traitement d'image pour comparer des données d'image d'un doigt d'une personne à identifier, comprenant :
    un dispositif (13) pour lire des données d'image dudit doigt (10) ;
    un dispositif (15A) pour générer des données de caractéristiques P2(j) du doigt, lesdites données de caractéristiques étant formées par des séries successives de valeurs générées dans une direction le long de la longueur dudit doigt, dans lesquelles chacune desdites valeurs correspond à la somme des sorties du dispositif de lecture de données d'image (13) obtenue par lecture dans une direction perpendiculaire à la longueur dudit doigt, et
    un dispositif (15B) pour comparer lesdites données de caractéristiques générées P2(j), aux données de caractéristiques de doigt précédemment enregistrées P1(i).

2. Appareil selon la revendication 1, caractérisé en ce que ledit dispositif de comparaison (15B) comprend un dispositif de stockage (18A) pour stocker les données de caractéristiques précédemment enregistrées P1(i).

3. Appareil selon la revendication 1, caractérisé en ce que ledit dispositif de comparaison (15B) comprend un dispositif de sortie (19) pour fournir une instruction, lorsque les données de caractéristiques P2(j) du doigt générées par ledit dispositif de génération (15A) coïncident avec les données de caractéristiques précédemment enregistrées P1(i).

4. Appareil selon l'une quelconque des revendications 1 à 3, caractérisé en ce qu'il comprend un dispositif (19), pour ouvrir une porte (20), lorsque ledit dispositif de comparaison (15B) trouve une coïncidence entre les données de caractéristiques P2(j) du doigt générées par ledit dispositif de génération (15A) et les données de caractéristiques enregistrées précédemment P1(i).

5. Appareil selon l'une quelconque des revendications 1 à 4, caractérisé en ce que ledit dispositif de lecture de données d'image (32) lit des données d'image dudit doigt (10) dans des unités incrémentales le long d'une direction longitudinale du doigt.

6. Appareil selon la revendication 5, caractérisé en ce que ledit dispositif de lecture (32) comprend :
    un dispositif (34) pour appliquer de la lumière audit doigt dans une direction perpendiculaire à la direction longitudinale du doigt ;
    un dispositif (37) pour convertir la lumière appliquée par ledit dispositif d'application de lumière (34) réfléchie par ledit doigt, et correspondant aux données d'image du doigt en un signal électrique ; et
    un dispositif (38) pour déplacer ledit dispositif d'application de lumière (34) et ledit dispositif de conversion (37) le long de la direction longitudinale du doigt.

F I G.  1

START

ST1

FINGER IMAGE INPUT

ST 2

A/D CONVERSION

ST 3

FEATURE EXTRACTION

ST4

STORE IN MEMORY

ST5

STORE IN IC CARD

END

FIG. 2

START

ST11

FINGER IMAGE INPUT

ST12

A/D CONVERSION

ST13

FEATURE EXTRACTION

ST14

STORE IN MEMORY

ST15

VERIFICATION

ST16

ENTRANCE / EXIT PROCESSING

END

FIG. 4

EP 0 347 671 B1

F I G. 3A

F I G. 3B

F I G. 5A

ROW

512 PIXELS

512 PIXELS COLUMN

F I G. 5B

P2( j )

O   js          js + i₂ − i₁                    511

START

$js = 0, M = X$ ── ST21

$j = js, i = i1$ ── ST22
$S = 0$

$S = S + (P1(i) - P2(j))^2$ ── ST23

$i = i + 1$ ── ST24
$j = j + 1$

ST25 — $i \leq i2$ — YES

NO

ST26 — $S < M$ — YES ── ST27

NO $M = S$

$js = js + 1$ ── ST28

ST29
YES — $js \leq 511 - (i2 - i1 + 2)$

NO

ST30 — $M < T$ — YES ── ST31

NO "PERSON"
HIMSELF

ST 32 — "ANOTHER PERSON"

END

F I G. 6

F I G. 7